# EUROPEAN PATENT SPECIFICATION

(11) **EP 1 287 505 B1**
(45) Date of publication and mention of the grant of the patent: **29.08.2012**
(21) Application number: 01931905.2
(22) Date of filing: 18.05.2001
(51) Int. Cl.: G07F 15/00, G07F 15/12, G07F 7/10, G07F 7/00

(54) **A UTILITY METERING SYSTEM INCORPORATING A TRANSACTION AUTHORISATION SYSTEM**
VERBRAUCHZÄHLGERÄT MIT TRANSAKTIONSBERECHTIGUNGSANORDNUNG
APPAREIL DOMESTIQUE DE MESURE COMPORTANT UN SYSTEME D'AUTORISATION DE TRANSACTIONS

(30) Priority: 22.05.2000 GB 0012392
(43) Date of publication of application: 05.03.2003
(73) Proprietor: Secure Electrans Limited, London SW1A 1LP (GB)
(72) Inventor: JARMAN, Michael, Haywards Heath, West Sussex RH16 1PB (GB); HOWARD, Gavin, West Sussex BN6 8LT (GB)
(74) Representative: Exell, Jonathan Mark
(86) International application number: PCT/GB2001/002275
(87) International publication number: WO 2001/091073

(56) References cited:
- GB-A- 2 324 898
- US-A- 5 146 067

## Description

### Field of the Invention

The present invention relates to a utility metering system, which incorporates a transaction authorisation system for secure authorisation of transactions and, in particular financial transactions.

### Background to the Invention

Fraud is increasing dramatically for "card not present" financial card transactions such as credit card, debit card and charge card transactions. In such transactions, business is typically effected remotely, e.g. by Telephone or Internet Shopping. The purchaser discloses his or her name, credit card number and expiry date in order for the credit card to be charged for a product or service.
These sorts of transactions are different to "card present" transactions at Electronic Point-of-Sale Terminals or the like, where both the cardholder (purchaser) and the card are required to be physically present. The purchaser is required to sign an authorisation to permit a transaction to be charged against that card's account. The merchant is accountable for the verification and authentication of the card and the validation of the cardholder's identity.

By the fact that:
1. A recognisable card is presented
2. Identification, Authorisation and Entitlement processes are enforced
3. The location of the transaction is legitimate
Then the transaction qualifies as a "card present" transaction.

Typically in "card not present" transactions it is not possible to verify the identity of the purchaser and the validity of the "card". Anybody knowing the information contents of a valid credit card can make purchases and charge that card account with "card not present" transactions. The purchaser need not even have the card. Another a common fraudulent practice is to acquire discarded credit card receipts, which contain the necessary account information, to create fraudulent "card not present" transactions. In order to avoid this, some merchants will only deliver to the address registered with the customer's credit card issuer (usually a Financial Institution). More recently, computer programs have been developed and made available on the Internet that successfully generate random credit card numbers.

One particular area where the use of credit cards is increasing exponentially is on the World Wide Web in e-commerce E-Tailer websites and the like. Whilst credit and debit cards are currently the only feasible ways for such sites to be paid for their products or services, the lack of security of transactions across the Internet, even if encrypted, has resulted in many financial problems and privacy concerns. Because transactions can be intercepted or monitored, unscrupulous persons are obtaining credit card numbers and fraudulently using them for other purchases. The level of security of websites varies considerably and many sites have found themselves being attacked for the contents of their databases containing credit card details.

In response to the potential and actual problems, the international bodies responsible for credit cards, including VISA and MasterCard, have introduced premium charges associated with "card not present" transactions. As these premiums are not normally charged on "card present" transactions, the vendor, who is competing with traditional vendors using point-of-sale "card present" transactions, has to bear a substantial overhead; this reduces his profit margin in order to remain competitive. The main reason that the international card issuing bodies claim that the premiums are justified is that a consumer can claim against a credit card issuer if the order is not properly fulfilled. Equally, where there is a dispute over a "card not present" transaction, such as the validity of the amount charged, authenticity of the transaction or proven receipt of goods the rules favour the consumer against the merchant. The merchant is accountable for all costs for transactions in dispute. In addition, in order to cover themselves against losses and overheads from dealing with these fraudulent transactions the card issuers add a premium to the merchant discount rate, as a form of insurance.

### Statement of Invention

According to one aspect of the present invention, there is provided a transaction authorisation system comprising a user interface unit capable of accepting a transaction authorisation and a utility meter provided at a location having an associated location identifier unique to the location, wherein the utility meter is arranged to communicate with the user interface unit, to obtain a transaction authorisation, and to securely transmit the transaction authorisation and location identifier as a transaction authorisation request for authorisation of the transaction.

Utility meters must be fixed at, or very close to, the location to be metered because they need to measure the supply of the utility as it enters the location. Taking advantage of the fact that an installed meter is virtually immoveable, that the meter has an embedded unique and secure identifier that identifier satisfies criterion 3 (the location of the transaction is known) and meets "card present" requirements. The user interface unit enables the user (the purchaser) to confirm their identity and to prove that the card is present by inputting a legitimate transaction authorisation (such as by entering the card in a card reader and providing an authorisation code), therefore satisfying criteria 1 and 2. The resultant transaction authorisation request can be securely communicated to the financial institutions for fulfilment and settlement as a legitimate "card present" transaction.

Preferably, the transaction authorisation system includes a communication unit, which communicates with an authorisation authority, wherein the utility meter is arranged to submit the authorisation request to the communication unit for transmission to the authorisation authority. Preferably, the utility meter is arranged to submit utility usage data to the communication unit.

Further utility meters may be provided at the location, wherein said further utility meters may be arranged to submit utility usage data to the communication unit. The further utility meters may be arranged to submit the utility usage data to said utility meter for submission to the communication unit.

The further meters may include gas and water meters. Preferably, the utility meter is an electricity meter.

The communication unit may be arranged to communicate utility usage data to a utility supplier. The communication may be direct or may be via a central control system. The authorisation authority may comprise a central control system, wherein the central control system is configured to process communicated authorisation requests and to submit the requests to appropriate banking authorities for fulfilment.

The communication unit may be a modem.

The user interface unit and the utility meter may communicate with each other via RF signals. The communication unit and the utility meter may communicate with each other via RF signals. The further utility meters may communicate via RF signals.

The user interface unit may include a card reader device, wherein the card reader device is arranged to read data from a card to be charged for the transaction, the user interface unit being responsive to process the data from the card to form at least a part of a transaction authorisation. The user interface unit may include a keypad, wherein the user interface unit is arranged to accept a code entered via the keypad to form at least a part of a transaction authorisation.

The utility meter may include a memory for securely storing a user's bank account data, wherein the user interface unit is arranged to accept an input from the user authorising use of at least part of the banking data to form at least a part of a transaction authorisation.

The user interface unit may include a display, wherein the user interface unit is arranged to display on request utility usage data from the utility meter.

The user interface unit may be connectable to a computer, wherein the user interface unit, when connected to a computer, is operative to make necessary transaction authorisation requests in response to electronic transactions initiated on the computer.

Preferably the transaction is a financial transaction. Preferably the user interface device is remote from the utility meter. Most preferably the user interface unit is a hand held device.

The system may comprise a digital cellular transceiver arranged to communicate with the utility meter for transmitting data to, and receiving data, from a remote source. The transceiver may be the communication unit. The system may further comprise a switching unit controllable by the energy supplier for switching appliances on and off, wherein when the utility meter receives a signal via the transceiver indicating the availability of cheap-rate energy it is arranged to control the switching unit, or send equivalent signals to a locally associated unit.

According to another aspect of the present invention, there is provided a method of making a transaction using the transaction authorisation system described above, according to claim 28.

The system may include a switching unit controllable by the utility meter provided at a location for switching appliances on and off and a communication unit, the utility meter having an associated location identifier unique to the location, the utility meter being arranged to communicate with a remote system via the communication unit, the remote system having a database of the unique identifiers, wherein upon determination or prediction of an energy surplus or shortage the remote system is arranged to select appropriate locations to switch appliances on or off to meet the surplus or shortage, for each selected location the remote system determining the location's unique identifier from the database and communicating control data for the location's switching unit to the location's utility meter via the location's communication unit using the location's unique identifier.

The system may be a pre-payment energy supply system, the utility meter being a pre-payment utility meter, , the utility meter having a memory for storing pre-payment credits, the utility meter being arranged to communicate with a remote system via the communication unit, the remote system having a database of the unique identifiers, wherein a payment for crediting to a meter includes the unique identifier, the remote communication unit being responsive to a payment to initiate communication with the communication unit of the location using the unique identifier and to add appropriate pre-payment credits to the memory.

Each communication unit may include data such as telephone or transponder numbers, passwords and the like for use in initiating communication with the communication unit, the data being stored in the database and being linked to the unique identifier for the location of the communication unit, wherein the remote system uses the unique identifier to obtain the data to initiate communication with the communication unit.

There is also disclosed a method of controlling the provision of energy to users having a pre-payment energy supply meter and a communication unit provided at a location, the utility meter having an associated location identifier unique to the location and a memory for storing pre-payment credits, the method comprising the steps of communicating with the utility meter via the communication unit and writing pre-payment credits to the memory.

By being able to selectively communicate with utility meters, surplus energy generated during off-peak periods can be utilised by energy storage devices such as off-peak heaters. Furthermore, the control of pre-payment credits to a meter can be maintained without the use of electronic keys and the like. This can be used for income support schemes and the like to arrange direct crediting of meters without the occupant being involved in the transaction.

Where the memory in a pre-payment meter reaches or falls below a predetermined level, the utility meter may be arranged to communicate with a predetermined authority to obtain emergency credits. Such emergency credits may be based, for example, against prior payment records and reputation, an authorisation from the energy supplier, issue of extra credits by a government body or a loan against the next payment of credits to the meter.

### Brief Description of the Drawings

Examples of the present invention will now be described in detail, with reference to the accompanying drawings in which:
Figure 1 is a schematic diagram of a system according to one aspect of the present invention;
Figure 2 is the schematic diagram of the system of Figure 1 including features according to a one aspect of the present invention;
Figure 3 is a schematic diagram of a system according to a preferred aspect of the present invention;
Figure 4 is the schematic diagram of the system of Figure 2 illustrating a number of additional aspects of the present invention.
Figure 5 is a schematic diagram of a system according to another aspect of the present invention;
Figure 6 is the schematic diagram of Figure 5 incorporating further aspects of the present invention; and,
Figure 7 is a schematic diagram of a system according to another aspect of the present invention.

### Detailed Description

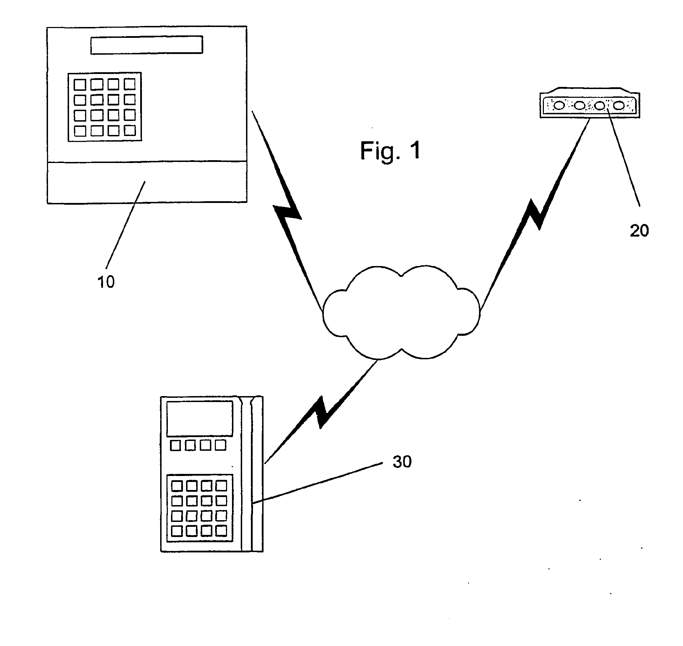

Figure 1 is a schematic diagram of a system according to one aspect of the present invention. A utility metering system includes a utility meter 10 provided at a location to be metered. The utility meter 10 is coupled to the utility supply and is arranged to provide the features and functions of a standard utility meter including a utility usage display. Preferably, the utility meter 10 is an electricity meter. A communication unit 20 is also provided at the location and is able to accept utility usage data from the utility meter and communicate the utility usage data to a utility supplier. A user interface unit 30 communicates with the utility meter 10 and is able to enter and display utility information upon request. This may include utility payments to a utility company from a deposit account or consumption, tariff, time, power interruption and payments history information. If the meter is configured to be a pre-pay meter, the credit balance and emergency credit information may also be displayed.

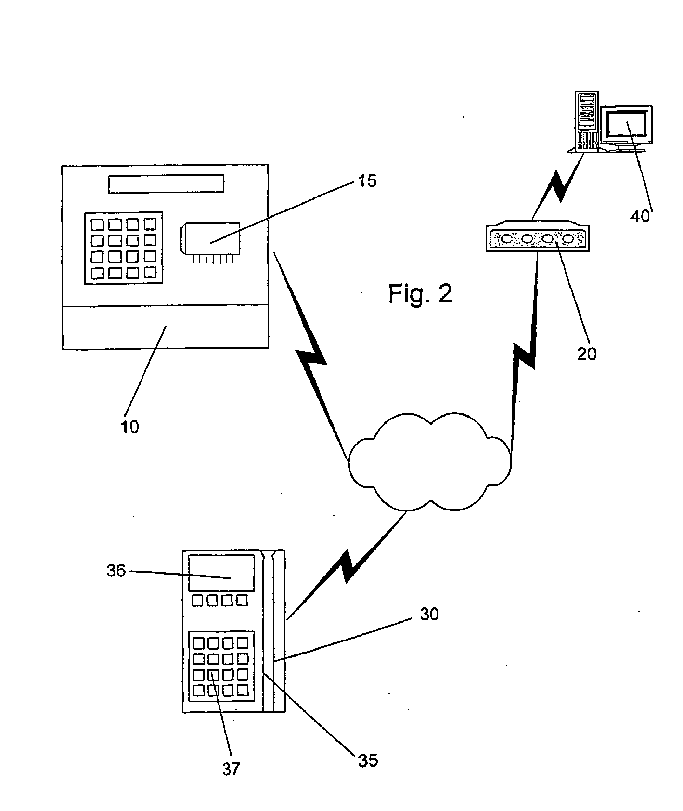

Figure 2 is the schematic diagram of the system of Figure 1 including features according to a preferred aspect of the present invention. The utility meter 10 has an identification code unique to the location embedded within it. The utility meter also includes a transaction processing system 15. The user interface unit 30 includes a card reader device 35, display 36 and keypad 37.

A user starts a transaction for goods or services, for example over the Internet or by telephone. Upon making an order or requesting a service, the user is provided with a transaction code and is requested to arrange payment. At the location, the user enters the transaction code into the user interface unit 30 via the keypad 37. The user interface unit 30 may contact a remote system (not shown) to obtain data on the transaction in dependence on the transaction code. The user is then requested via prompts on the display 36 to provide details of a payment account to be charged by making a transaction authorisation to thereby authorise payment of the transaction. The user inserts a credit or debit card into the card reader device 35, which obtains the necessary card details including card number and expiry date. The user then enters an authorisation code associated with the card via the keypad 37. The user interface unit 30 communicates with the utility meter 10 and passes the transaction code and card data to the utility meter 10. These are combined at the utility meter 10 with the identification code to form an authorisation request. Preferably, parts or all of authorisation request are encrypted at the utility meter 10 and/or at the user interface unit 30. The transaction processing system 15 of the utility meter 10 establishes communication with the communication unit 20 and controls the communication unit 20 to establish communication with an authorisation authority 40. The encrypted authorisation request is then communicated via the communication unit 20 to the authorisation authority 40 which processes the authorisation request as a "card present" type transaction and arranges payment of the transaction on the user's card account. An authorisation response message indicating success or failure of the authorisation request is returned to the user interface unit. This message may contain an authorisation code to be passed on to the product/service provider to indicate fulfilment of payment. Utility usage bills may also be paid in this way, the user authorising payment via the user interface unit 30. The system may be programmed such that utility bills are automatically paid via a predetermined credit card or payment deposit account without user intervention after the initial set-up. In the case of pre-payment utility meters, credit may be purchased via the user interface unit 30 in the manner described above.

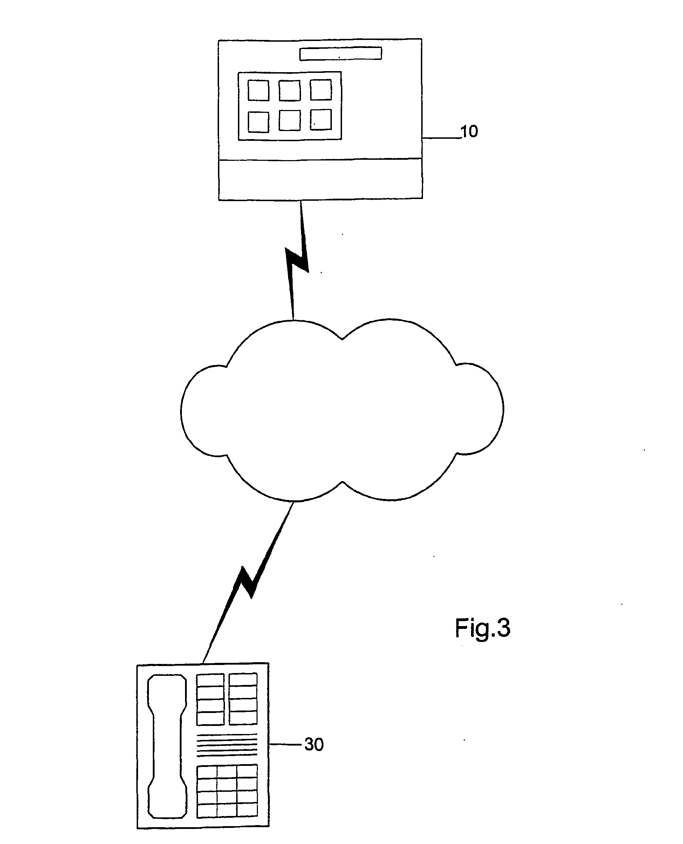

Figure 3 is a schematic diagram of a system according to a preferred aspect of the present invention. In this configuration, the communication unit and user interface unit are integrated into a single device 30. Preferably the device also functions as a standard telephone and would therefore be connected to the PSTN. The telephone may be a standard wired telephone, a digital cordless telephone (such as a DECT telephone), a cellular radio telephone or some other form of telephone capable of making and receiving communications. Preferably the device 30 includes a display screen for displaying telephony, utility meter and transaction data. The device may include memory and one or more processors for running computer software for applications such as placing bets, purchasing lottery tickets, least cost routing for long distance phone calls and the like. The software is preferably downloadable into the device 30 over the PSTN (not shown).

Whilst the following description and accompanying Figures refer back to the system configuration of Figures 1 and 2, it will be apparent that the additional features could equally be applied to the configuration of Figure 3 in which the user interface unit 30 and communication unit 20 are combined.

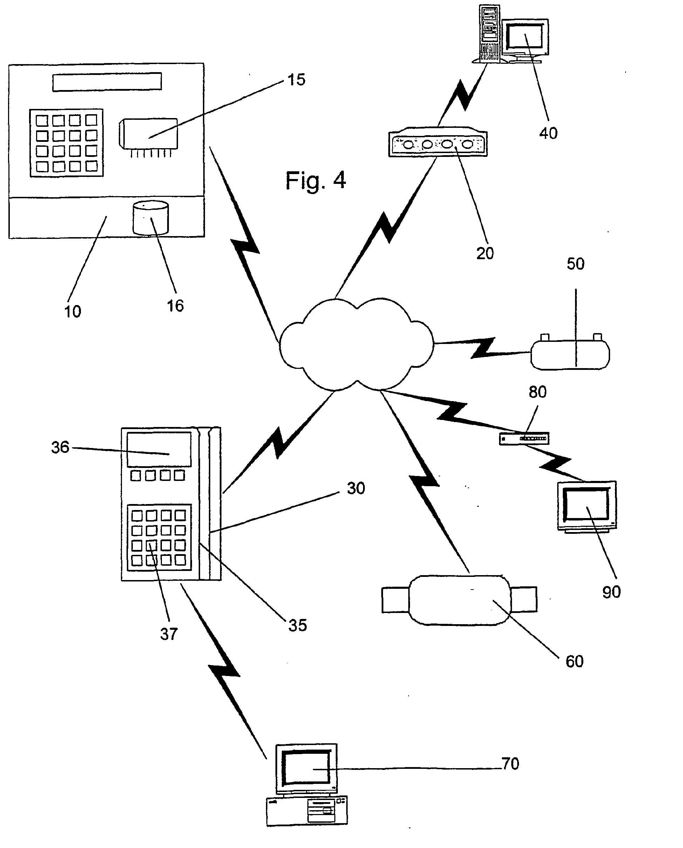

Figure 4 is the schematic diagram of Figure 2 illustrating a number of additional aspects of the present invention. Further utility meters 50 and 60 are provided at the location and are adapted to communicate further utility usage data to the utility meter 10. Preferably the further utility meters 50, 60 are for gas and water respectively. The utility meter 10 is configured to communicate the further utility usage data to the appropriate utility supplier via the communication unit 20. The user interface unit 30 is configured to communicate with the further utility meters 50, 60 and to display utility usage and charging information upon request.

Instead of, or in addition to, the card reader device 35, the utility meter 10 may be provided with a memory device 16 in which a user's bank account data is stored. In place of providing a card to be charged for a transaction, the user may authorise the utility meter to release some of the banking data for the purpose of charging. The user's computer 70 may also be adapted or arranged to communicate with the user interface unit 30 via a serial port connection, USB, infra red, BlueTooth or the like. Communication between the computer 70 and user interface unit 30 allows the transaction data for an online transaction to be automatically communicated to the user interface unit 30 without the user's intervention. Furthermore, utility usage data, transaction data and the like could be communicated from the utility meter 10 to the computer 70 via the user interface unit 30 for storage or analysis.

A set-top box 80 connected to a television 90 may also be provided at the location. The set-top box 80 may operate in a similar manner to the computer 70, communicating with the user interface unit 30 for authorisation of transactions made via the set-top box. Additionally, the set-top box 80 may allow the whole system to be managed, for data to be added and updated and for transactions reviewed via communication with and/or control from the user interface unit 30. Furthermore, it is possible that the set-top box 80, television 90 and television remote control (not shown) can act in place of the user interface unit 30. If necessary, a card reader could be provided in the remote control or the smart card reader commonly included in set-top boxes could be utilised.

It is preferred that each utility meter (10, 50, 60), the user interface unit 30 and the communication unit 20 each include an RF communication device, thereby forming a localised Pico-network. Communication is via secure, low power radio transmissions. If RF communication is not feasible, cables or other connection mechanisms may be used. The communication unit 20 is likely to be a modem transparently connected to the PSTN between the user's telephone and telephone socket. Obviously, the communication unit could operate via ISDN and could be integrated into the utility meter subject to a telephone socket being close to the meter. Further communication mechanisms such as GSM or cable connection are equally feasible and other mechanisms could be employed as and when they become available without any technical difficulty.

The utility meter 10 is preferably configured to be able to alert the authorisation authority 40 or some other predetermined online services provider via the communication unit 20 if the operation of the Pico-network fails or if one of the system components fails completely or fails to pass a predetermined test. In particular, gas and water meters may be configured to issue an alert upon detection of a leak. The utility meter is preferably configured to communicate with the authorisation authority 40 to inform it of power failures and interruptions in service. Fault and service failure information could be used to determine whether the equipment has been tampered with and whether further investigation is necessary. Where tampering is suspected authorisation requests containing the meter's identification code would no longer be allowed.

In order to reduce communication between utility meters and the authorisation authority, the utility meter 10 may be arranged to retrieve and communicate utility usage data on a regularly scheduled but variable interval (such as monthly) basis at a predetermined time. The data may be verified, aggregated and then delivered to the appropriate energy supplier or the like. Whilst connected, the utility meter may download new data and/or parameter changes such as new tariffs, a new dial-in time or marketing messages. Additionally, new software for the meter 10 or user interface unit 30 may be automatically downloaded.

Each user may be given an authorisation code to access the user interface unit 30. The personal access code may serve to allow the user to his or her own data stored in the system and only to use cards and data associated with him or her. Optionally, a "super user" may be nominated for the location having the authority to restrict others from access or certain types of transactions, authorise new personal access codes and generally monitor the system. A number of user interface units 30 may be used in the location at once. Where other utility meters are adapted to forward utility usage information to utility meter 10, these are preferably arranged to communicate this information at least every 24 hours. Communication between the user interface unit 30 and the utility meter 10 and the communication unit 20 occurs as and when necessary.

Whilst the processing and composition of an authorisation request is performed at the utility meter 10 in the above described embodiment, it is equally possible that the identification code is obtained from the utility meter 10 by the user interface unit 30, combined with the card data, transaction code and authorisation code, encrypted and then communicated to the utility meter 10. At the utility meter 10, any necessary data packeting and the like are performed prior to transmission. Encryption algorithms such as DES, RSA or any other available mechanism may be used.

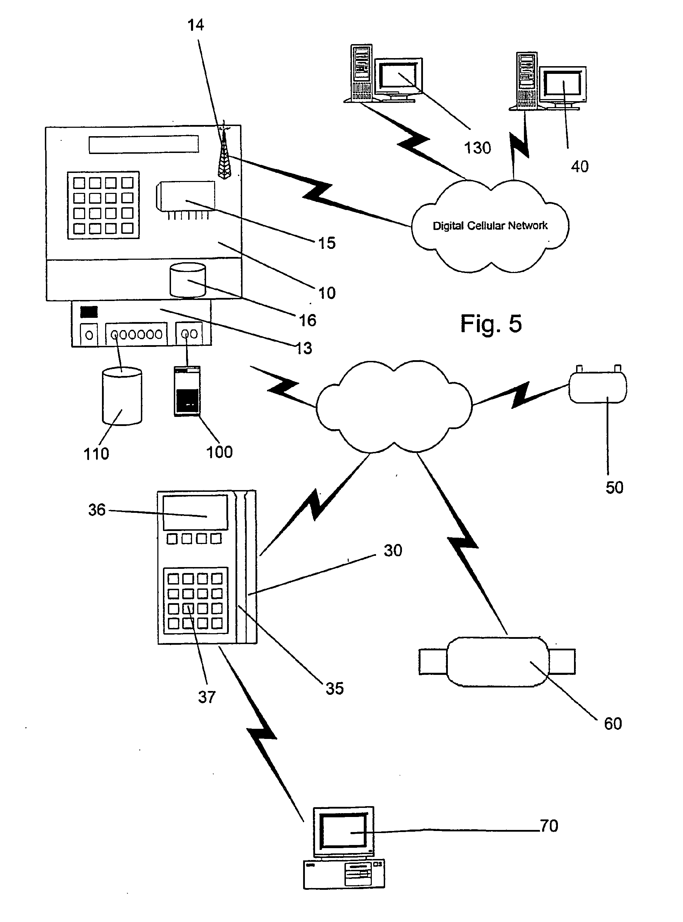

Figure 5 is a schematic diagram of a system according to another aspect of the present invention. The utility meter 10 includes a number of controllable switches 13 and a transceiver 14. The switches 13 are connected to appliances that are capable of storing energy for later use. In particular, these may include electric storage heaters 100 and hot water storage systems 110. The transceiver 14 is configured to be able to send and receive data via a digital cellular network 120.

The utility meter operates substantially as has been described with reference to the previous Figures with the exception that communication is via the transceiver 14 instead of a communication unit 20.

During low electrical power consumption periods, an electricity supplier 130 can selectively call the transceivers 14 using the digital cellular network 120 and offer reduced-rate electrical power. The utility meter 10 is able to determine, via the switches 13, whether there are appliances (100, 110) with capacity for accepting the power. If so, the utility meter communicates acceptance to the electricity supplier 130 and switches on the appliances (100, 110) via the switches 13.

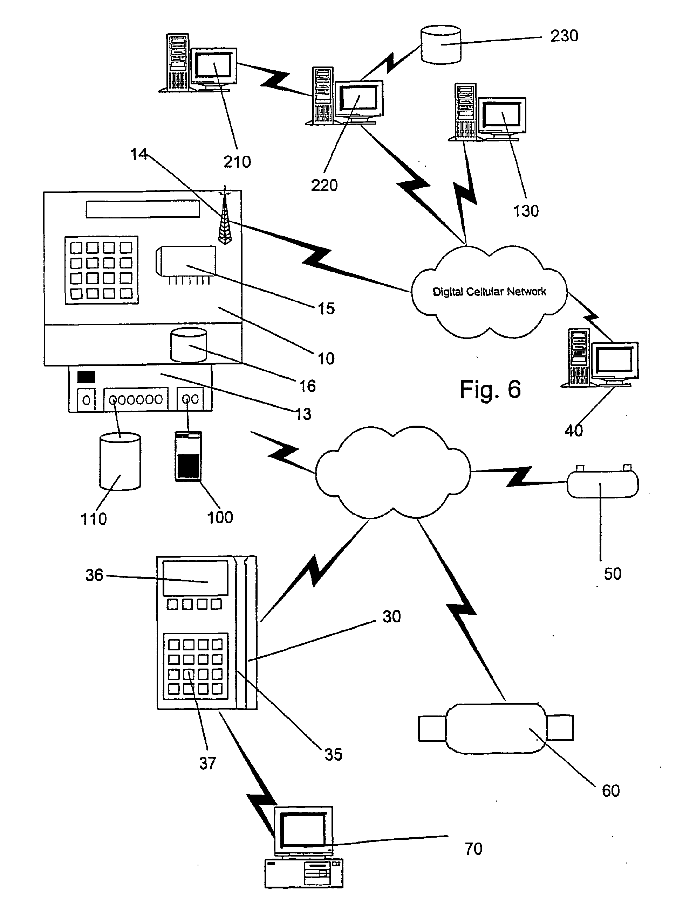

Figure 6 is a schematic diagram of the system of Figure 5 incorporating further aspects of the present invention. Where a utility meter 10 is configured as a pre-pay meter, the location is also provided with an identification card. The identification card carries the unique identification code embedded within the utility meter 10 and allows somebody to credit pre-payments to the meter 10 remotely. On visiting a bank, supermarket or other facility offering pre-payment facilities 210, someone possessing the card can present it along with a pre-payment in order for the meter to be credited. Data from the card is obtained at the pre-payment facilities 210 by reading the card using a card reader. From the data, the unique identification code is obtained and communicated, along with the amount of pre-payment received, to a central communication unit 220.

The communication unit 220 includes a database 230 of the unique identification codes cross-referenced with the digital cellular network number for the transceiver for the meter having that code. The code received from the pre-payment facility is cross-referenced in the database 230 and the digital cellular number is obtained. The communication unit 220 communicates with the meter 10 via the digital cellular network 120 and instructs it to credit the amount prepaid.

A pre-payment transaction does not have to be done by the occupant of the location and could be performed by other parties, including Government Agencies. The utility meter 10 may be arranged to communicate with a government agency or similar if a suitably programmed pre-payment meter reaches a predetermined level of credit. In this manner, if a family on government funded income support or a similar scheme was in threat of having their gas or electricity cut off due to lack of credit, the government agency is informed and able to authorise an emergency credit or a credit against a future income support payment. Using such a configuration, money intended for energy in a pensioner income support payment would never need be paid to people. Instead, the money can be automatically credited to the relevant utility meter 10 thereby avoiding possible abuse. In addition, the system could be configured such that pre-payment could be made from the home via the user interface unit 30 in the same manner as a regular financial transaction is made.

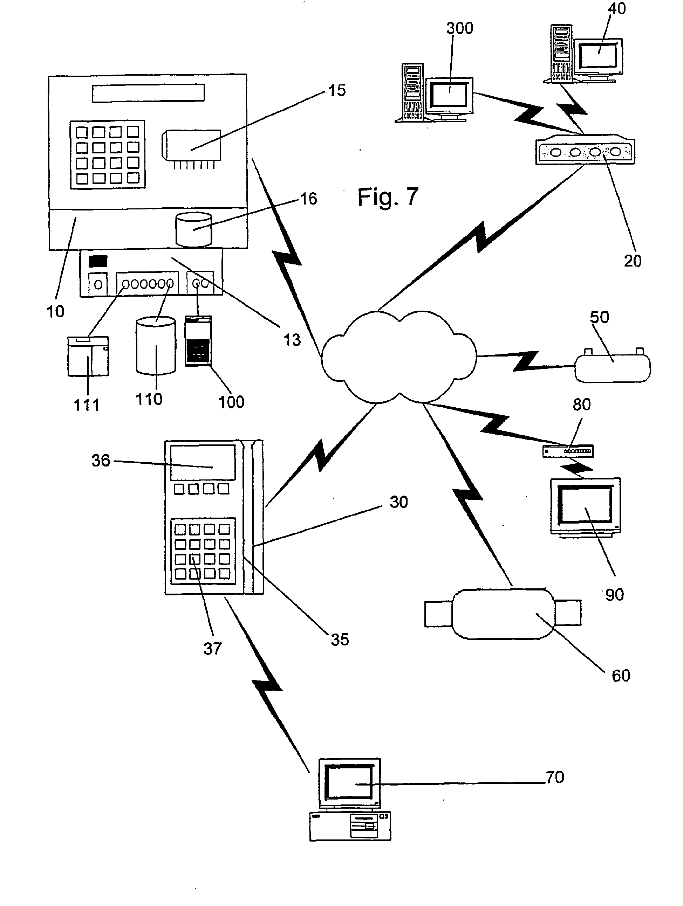

Figure 7 is a schematic diagram of a system according to another aspect of the present invention. The utility meter 10 controls a number of switches 13 and is in communication with a communication unit 20. The switches 13 are connected to appliances that consume comparatively high amounts of energy when operating. For example, these may include electric storage heaters 100, hot water storage systems 110 and washing machines 111. The communication unit 20 is configured to be able to send and receive data via communications link 120.

The utility meter operates substantially as has been described with reference to the previous Figures 1 to 4.

Based on an agreement with an energy supplier, the utility meter 10 can be configured to automatically operate the appliances 100, 110, 111 during certain periods and cease their operation during other periods. In this way, energy consumption can be substantially controlled by the supplier because the supplier can set the periods during which the high energy consuming devices operate to be the periods in which there is a predicted drop in energy demand. Energy supplied under such an agreement during the predetermined periods would likely to be discounted.

Control of the utility meter is achieved by programming it to call an energy management system 300 at predetermined periods using the communication unit 20. Alternatively, the energy management system 300 may call selected utility meters 10 via the communication unit 20. The energy management system 300 stores messages for the utility meters 10 concerning requested operation periods of the appliances 100, 110, 111. The messages are downloaded and used to control the operation of the appliances using the switches 13. The messages can be generated by energy suppliers based on predicted energy demand. In addition to appliance control messages, messages may also change the frequency in which the utility meter 10 calls the energy management system 300.

To avoid charging the user for this call, a free-phone number may be used. Alternatively, the calling line identifier (CLI) of callers to the energy management system 300 may be determined. Only calls from the CLI is registered to a utility meter 10 having a message waiting in the energy management system 300 may be answered.

A user need not accept the control messages from the energy management system 300. Optionally, approval may need to be sought from the user via the user interface unit 30 to apply control to appliances according to a control message. The control messages could also be overridden at the utility meter 10 or the appliance 100, 110, 111.

The switches 13 may be connected to a separate energy circuit in the location to which only the high energy appliances 100, 110, 111 are connected. Alternatively the switches may be installed at or near the appliances and controlled, for example, using the Pico-network. In such a configuration, the switches would include their own Pico-network communication device.

It is estimated that an array of 20 transponders at an energy management system 300 can process 5,000,000 calls per day. Such a turnover should allow an energy supplier to achieve real time response to energy supply and demand requirements.

Since the utility meter is in a fixed place it provides a unique identification key that "passports" all other intelligent devices within the location. The utility meter can use its unique electronic identity and its "fixed place" location to log the activity of all related Pico-net devices

Although various references to digital cellular communication systems have been made, the present invention is applicable to any communication system where two-way point-to-point communication is possible. For example, communication could be made to via the PSTN. Where the communication is made to a link that is not dedicated to the utility meter system, such as where a communication unit shares the main telephone line of a home, the utility meter 10 or communication unit 20 may be arranged to monitor the calling line identifier (CLI) of incoming calls and to intercept those from predetermined numbers such as the energy management system 300 or communication unit 220 before any telephone in the home rings and disturbs the occupants.

Whilst a number of different combinations of features have been described with reference to different embodiments of the present invention, the skilled person will appreciate that all the features described are complementary and could be combined in different combinations to those specifically described without any technical difficulty. Furthermore, whilst the above description has been directed to a utility meter incorporating various features enabling interaction with a user or the outside world, it will be apparent that a suitable add-on unit could be installed within a home or business premises and arranged to communicate with an existing meter. Preferably an add-on unit would be permanently attached to an existing meter to meet the security and authorisation requirements detailed above. The reader will appreciate that such an add-on unit falls within the scope of the present invention.

## Claims

1. A transaction authorisation system **characterised by**: a user interface unit (30) capable of accepting user inputs on a transaction and including a card reader device (35); and, a utility meter (10) provided at a location having an associated location identifier unique to the location, wherein the card reader device (35) is arranged to read data from a card to be charged for the transaction, the utility meter (10) and the user interface unit (30) being arranged to communicate, to generate a transaction authorisation request based on the user inputs on the transaction, on data on the card read by the card reader device (35) and on the location identifier, and to transmit the transaction authorisation request to a remote authorisation authority (40) to obtain authorisation of the transaction.

2. A transaction authorisation system according to claim 1, further comprising a communication unit (20) arranged to communicate with the authorisation authority (40), wherein the utility meter (10) is arranged to submit the authorisation request to the communication unit (20) for communication to the authorisation authority to obtain authorisation of the transaction.

3. A transaction authorisation system according to claim 2, in which the utility meter (10) is arranged to submit utility usage data to the communication unit (20).

4. A transaction authorisation system according to claim 2 or 3, comprising a further utility meter (10) provided at the location, wherein said further utility meter (10) is arranged to submit utility usage data to the communication unit (20).

5. A transaction authorisation system according to claim 4, in which said further utility meter (50, 60) is arranged to submit the utility usage data to said utility meter (10) for submission to the communication unit (20).

6. A transaction authorisation system according to claim 4 or 5, in which said further meter (50, 60) is a gas or water meter.

7. A transaction authorisation system according to any preceding claim, in which the utility meter (10) is an electricity meter.

8. A transaction authorisation system according to any of claims 3 to 7, in which the communication unit (20) is arranged to communicate utility usage data to a utility supplier.

9. A transaction authorisation system according to any of claims 3 to 7, in which the communication unit (20) communicates with one or more utility suppliers via a central control system.

10. A transaction authorisation system according to claim 2, in which the authorisation authority (40) comprises a central control system, wherein the central control system processes received authorisation requests and submits the requests to appropriate banking authorities for fulfilment.

11. A transaction authorisation system according to any of claims 2 to 10, in which the communication unit (20) is a modem.

12. A transaction authorisation system according to any of claims 2 to 10, in which the user interface unit (30) is the communication unit (20).

13. A transaction authorisation system according to claim 12, wherein the user interface unit (30) is a telephone.

14. A transaction authorisation system according to any preceding claim, in which the user interface unit (30) and the utility meter (10) communicate with each other via RF signals.

15. A transaction authorisation system according to any of claims 2 to 11, in which the communication unit (20) and the utility meter (10) communicate with each other via RF signals.

16. A transaction authorisation system according to claim 4 or 5, in which the further utility meter (10) communicates via RF signals.

17. A transaction authorisation system according to any preceding claim, in which the user interface unit (30) includes a keyboard (37), wherein the user interface unit (30) is arranged to accept data entered via the keyboard (37) to form at least a part of the transaction authorisation request.

18. A transaction authorisation system according to any preceding claim, in which the utility meter (10) includes a memory (16) for storing a user's banking data, wherein the user interface unit (30) is arranged to accept an input from the user authorising use of at least part of the banking data, the utility meter (10) then using the at least part of the banking data to form at least a part of the transaction authorisation request.

19. A transaction authorisation system according to claim 1, 3 or 5, in which the user interface unit (30) includes a display, wherein the user interface unit (30) is arranged to display on request utility usage data from the utility meter (10).

20. A transaction authorisation system according to any preceding claim, in which the user interface unit (30) is connectable to a computer (70), wherein the user interface unit (30), when connected to a computer (70), is operative to make necessary transaction authorisation requests in response to electronic transactions initiated on the computer (70).

21. A transaction authorisation system according to claim 20, wherein the user interface unit (30) includes a USB connector for connection to the computer (70).

22. A transaction authorisation system according to any preceding claim, in which the transaction is a financial transaction.

23. A transaction authorisation system according to any preceding claim, in which the user interface unit (30) is remote from the utility meter (10).

24. A transaction authorisation system according to any preceding claim, further comprising a digital cellular transceiver (14) arranged to communicate with the utility meter (10) for transmitting data to, and receiving data, from a remote source.

25. A transaction authorisation system according to claim 24 when dependent on claim 2, in which the transceiver is the communication unit (20).

26. A transaction authorisation system according to claim 24 or 25, further comprising a switching unit controllable by the utility meter (10) for switching one or more appliances on or off, wherein when the utility meter (10) receives a signal via the transceiver indicating the availability of cheap-rate energy it is arranged to control the switching unit to switch appliances on.

27. A transaction authorisation system according to any preceding claim, in which the transaction authorisation request comprises data relating to a transaction and an authorisation to complete the transaction.

28. A method for making a transaction using the transaction authorisation system of any preceding claim, **characterised by** the steps of requesting goods or services for which payment is required, receiving transaction data, entering the transaction data via the user interface (30), reading data from a card to be charged for the transaction via a reader device (35), the user interface (30) communicating with a utility meter (10) provided at a location having an associated with location identifier unique to the location, generating a transaction authorisation request based on the transaction data input by the user, on the data read from the card and on the location identifier and communicating the transaction authorisation request to a remote authorisation authority to obtain authorisation for the transaction.

29. A transaction authorisation system according to claim 2, further comprising a switching unit (13) controllable by the utility meter (10) provided at the location for switching appliances (100, 110, 111) on and off, the utility meter (10) being arranged to communicate with a remote system via the communication unit (20), the remote system (130) having a database of the unique identifiers, wherein upon determination or prediction of an energy surplus or shortage the remote system (130) is arranged to select appropriate locations to switch appliances on or off to meet the surplus or shortage, for each selected location the remote system (130) determining the location's unique identifier from the database and communicating control data for the location's switching unit to the location's utility meter (10) via the location's communication unit (20) using the location's unique identifier.

30. A transaction authorisation system according to claim 2, wherein the utility meter (10) is a pre-payment utility meter (10), the utility meter (10) having a memory for storing pre-payment credits, the utility meter (10) being arranged to communicate with a remote system (300) via the communication unit (20), the remote system (300) having a database (230) of the unique identifiers, wherein a payment for crediting to a meter includes the unique identifier, the remote system (300) being responsive to a payment to initiate communication with the communication unit (20) of the location using the unique identifier and to add appropriate pre-payment credits to the memory.

31. A transaction authorisation system according to claim 30, in which upon pre-payment credits in the memory reaching or falling below a predetermined level, the utility meter (10) is arranged to communicate with a predetermined authority to obtain emergency credits.

32. A transaction authorisation system according to claim 29, 30 or 31, in which each communication unit (20) includes data for use in initiating communication with the communication unit (20), the data being stored in the database and being linked to the unique identifier for the location of the communication unit (20), wherein the remote system uses the unique identifier to obtain the data to initiate communication with the communication unit (20).

## Patentansprüche

1. Transaktionsberechtigungssystem
**gekennzeichnet durch**:
eine Anwenderschnittstelleneinheit (30), die in der Lage ist, Anwendereingaben zu einer Transaktion anzunehmen, und die eine Kartenleservorrichtung (35) enthält; und
ein Versorgungsmessgerät (10), das an einem Ort vorgesehen ist, der einen zugeordneten Ortsidentifizierer aufweist, der zu dem Ort eindeutig ist, wobei die Kartenleservorrichtung (35) angeordnet ist, um Daten aus einer für die Transaktion aufzuladenden Karte zu lesen, wobei das Versorgungsmessgerät (10) und die Anwenderschnittstelleneinheit (30) angeordnet sind, um zu kommunizieren, um eine Transaktionsberechtigungsanfrage zu erzeugen, die auf den Anwendereingaben zur Transaktion, auf Daten auf der Karte, die von der Kartenlesevorrichtung (35) gelesen werden, und auf dem Ortsidentifizierer beruht, und um die Transaktionsberechtigungsanfrage an eine entfernte Autorisierungsstelle (40) zu übertragen, um die Autorisierung für die Transaktion zu erhalten.

2. Transaktionsberechtigungssystem nach Anspruch 1,
weiter aufweisend eine Kommunikationseinheit (20), die angeordnet ist, um mit der Autorisierungsstelle (40) zu kommunizieren, wobei das Versorgungsmessgerät (10) angeordnet ist, um die Berechtigungsanfrage der Kommunikationseinheit (20) zur Kommunikation mit der Autorisierungsstelle zuzuführen, um die Berechtigung der Transaktion zu erhalten.

3. Transaktionsberechtigungssystem nach Anspruch 2,
in welchem das Versorgungsmessgerät (10) angeordnet ist, um Versorgungsverbrauchsdaten der Kommunikationseinheit (20) zuzuführen.

4. Transaktionsberechtigungssystem nach Anspruch 2 oder 3,
aufweisend ein weiteres Versorgungsmessgerät (10), welches an dem Ort vorgesehen ist, wobei das weitere Versorgungsmessgerät (10) angeordnet ist, um Versorgungsverbrauchsdaten der Kommunikationseinheit (20) zuzuführen.

5. Transaktionsberechtigungssystem nach Anspruch 4,
in welchem das weitere Versorgungsmessgerät (50, 60) angeordnet ist, um die Versorgungsverbrauchsdaten dem besagten Versorgungsmessgerät (10) zur Weiterleitung an die Kommunikationseinheit (20) zuzuführen.

6. Transaktionsberechtigungssystem gemäß Anspruch 4 oder 5,
in welchem das weitere Messgerät (50, 60) ein Gas- oder Wasser-Messgerät ist.

7. Transaktionsberechtigungssystem nach einem beliebigen vorherigen Anspruch,
in welchem das Versorgungsmessgerät (10) ein Elektrizitätsmessgerät ist.

8. Transaktionsberechtigungssystem nach einem der Ansprüche 3 bis 7,
in welchem die Kommunikationseinheit (20) angeordnet ist, um Versorgungsverbrauchsdaten zu einem Versorgungsbereitsteller zu kommunizieren.

9. Transaktionsberechtigungssystem nach irgendeinem der Ansprüche 3 bis 7,
in welchem die Kommunikationseinheit (20) mit einem oder mehreren Versorgungsbereitstellern über ein zentrales Steuerungssystem kommuniziert.

10. Transaktionsberechtigungssystem gemäß Anspruch 2,
in welchem die Autorisierungsstelle (40) ein zentrales Steuerungssystem aufweist, wobei das zentrale Steuerungssystem erhaltene Berechtigungsanfragen verarbeitet und zur Ausführung die Anfragen geeigneten Bankenstellen zuführt.

11. Transaktionsberechtigungssystem nach irgendeinem der Ansprüche 2 bis 10,
in welchem die Kommunikationseinheit (20) ein Modem ist.

12. Transaktionsberechtigungssystem nach irgendeinem der Ansprüche 2 bis 10,
in welchem die Anwenderschnittstelleneinheit (30) die Kommunikationseinheit (20) ist.

13. Transaktionsberechtigungssystem nach Anspruch 12, wobei die Anwenderschnittstelleneinheit (30) ein Telefon ist.

14. Transaktionsberechtigungssystem nach irgendeinem vorhergehenden Anspruch, bei welchem die Anwenderschnittstelleneinheit (30) und das Versorgungsmessgerät (10) miteinander über RF-Signale kommunizieren.

15. Transaktionsberechtigungssystem nach einem der Ansprüche 2 bis 11,
in welchem die Kommunikationseinheit (20) und das Verbrauchsmessgerät (10) miteinander über RF-Signale kommunizieren.

16. Transaktionsberechtigungssystem nach Anspruch 4 oder 5, in welchem das weitere Versorgungsmessgerät (10) über RF-Signale kommuniziert.

17. Transaktionsberechtigungssystem nach irgendeinem vorhergehenden Anspruch, in welchem die Anwenderschnittstelleneinheit (30) eine Tastatur (37) einschließt, wobei die Anwenderschnittstelleneinheit (30) angeordnet ist, um Daten zu akzeptieren, die über die Tastatur (37) eingegeben worden sind, um zumindest einen Teil der Transaktionsberechtigungsanfrage zu bilden.

18. Transaktionsberechtigungssystem nach irgendeinem vorhergehenden Anspruch, in welchem das Versorgungsmessgerät (10) einen Speicher (16) zum Speichern von Bankdaten eines Anwenders einschließt, wobei die Anwenderschnittstelleneinheit (30) angeordnet ist, um eine Eingabe des Anwenders zu akzeptieren, die die Verwendung von zumindest einem Teil der Bankdaten autorisiert, wobei das Versorgungsmessgerät (10) dann den zumindest einen Teil der Bankdaten verwendet, um zumindest einen Teil der Transaktionsberechtigungsanfrage zu bilden.

19. Transaktionsberechtigungssystem nach Anspruch 1, 3 oder 5, in welchem die Anwenderschnittstelleneinheit (30) eine Anzeigevorrichtung einschließt, wobei die Anwenderschnittstelleneinheit (30) angeordnet ist, um auf Anfrage hin Versorgungsverbrauchsdaten vom Versorgungsmessgerät (10) anzuzeigen.

20. Transaktionsberechtigungssystem nach irgendeinem vorhergehenden Anspruch, in welchem die Anwenderschnittstelleneinheit (30) mit einem Computer (70) verbindbar ist, wobei die Anwenderschnittstelleneinheit (30), wenn sie mit einem Computer (70) verbunden ist, betriebsfähig ist, um erforderliche Transaktionsberechtigungsanfragen als Antwort auf elektronische Transaktionen durchzuführen, die auf dem Computer (70) eingeleitet worden sind.

21. Transaktionsberechtigungssystem nach Anspruch 20, wobei die Anwenderschnittstelleneinheit (30) einen USB-Verbinder zur Verbindung mit dem Computer (70) aufweist.

22. Transaktionsberechtigungssystem nach irgendeinem vorhergehenden Anspruch, in welchem die Transaktion eine Finanztransaktion ist.

23. Transaktionsberechtigungssystem gemäß irgendeinem vorhergehenden Anspruch, in welchem die Anwenderschnittstelleneinheit (30) von dem Versorgungsmessgerät (10) entfernt gelegen ist.

24. Transaktionsberechtigungssystem gemäß irgendeinem vorhergehenden Anspruch, weiter aufweisend einen digitalen zellulären Transceiver (14) der angeordnet ist, um mit dem Versorgungsmessgerät (10) zur Übertragung von Daten zu einer und zum Empfang von Daten von einer entfernten Quelle zu kommunizieren.

25. Transaktionsberechtigungssystem nach Anspruch 24, wenn dieser von Anspruch 2 abhängt, in welchem der Transceiver die Kommunikationseinheit (20) ist.

26. Transaktionsberechtigungssystem nach Anspruch 24 oder 25, weiter aufweisend eine Schalteinheit, die vom Versorgungsmessgerät (10) steuerbar ist, um eine oder mehrere Einrichtungen ein- oder auszuschalten, wobei sie angeordnet ist, um die Schalteinheit zum Einschalten der Einrichtungen zu steuern, wenn das Versorgungsmessgerät (10) ein Signal über den Transceiver empfängt, welches die Verfügbarkeit von Billigtarifenergie anzeigt.

27. Transaktionsberechtigungssystem nach irgendeinem vorhergehenden Anspruch, in welchem die Transaktionsberechtigungsanfrage Daten aufweist, die eine Transaktion und eine Autorisierung zur Vollendung der Transaktion betreffen.

28. Verfahren zur Durchführung einer Transaktion unter Verwendung des Transaktionsberechtigungssystems aus einem der vorhergehenden Ansprüche, **gekennzeichnet durch** die Schritte:
Anforderung von Waren oder Dienstleistungen, für welche eine Bezahlung erforderlich ist,
Empfang von Transaktionsdaten,
Eingabe der Transaktionsdaten über die Anwenderschnittstelle (30),
Lesen von Daten von einer für die Transaktion aufzuladenden Karte über eine Leservorrichtung (35), wobei die Anwenderschnittstelle (30) mit einem Versorgungsmessgerät (10) kommuniziert, welches an einem Ort vorgesehen ist, der einen zugeordneten zum Ort eindeutigen Ortsidentifizierer besitzt,
Erzeugen einer Transaktionsberechtigungsanfrage beruhend auf den vom Anwender eingegebenen Transaktionsdaten, auf den von der Karte gelesenen Daten und auf dem Ortsidentifizierer und Kommunizieren der Transaktionsberechtigungsanfrage zu einer entfernten Autorisierungsstelle, um eine Autorisierung für die Transaktion zu erhalten.

29. Transaktionsberechtigungssystem nach Anspruch 2, weiter aufweisend eine Schalteinheit (13), die von dem Versorgungsmessgerät (10) steuerbar ist, das an dem Ort vorgesehen ist, um Einrichtungen (100, 110, 111) ein und auszuschalten, wobei das Versorgungsmessgerät (10) angeordnet ist, um mit einem entfernten System über die Kommunikationseinheit (20) zu kommunizieren, wobei das entfernte System (130) eine Datenbank der eindeutigen Identifizierer besitzt, wobei auf eine Bestimmung oder Vorhersage eines Energieüberschusses oder einer Energieknappheit das entfernte System (130) angeordnet ist, um geeignete Orte auszuwählen, um Einrichtungen ein- oder auszuschalten, um dem Überschuss oder der Knappheit zu begegnen, wobei das entfernte System (130) für jeden ausgewählten Ort den eindeutigen Ortsidentifizierer aus der Datenbank bestimmt und Steuerungsdaten für die Schalteinheit am Ort zum örtlichen Versorgungsmessgerät (10) über die örtliche Kommunikationseinheit (20) unter Verwendung des örtlichen eindeutigen Identifizierers kommuniziert.

30. Transaktionsberechtigungssystem nach Anspruch 2, wobei das Versorgungsmessgerät (10) ein Vorauszahlungs-Versorgungsmessgerät (10) ist, wobei das Versorgungsmessgerät (10) einen Speicher zum Speichern von Vorauszahlungsguthaben besitzt, wobei das Versorgungsmessgerät (10) angeordnet ist, um mit einem entfernten System (300) über die Kommunikationseinheit (20) zu kommunizieren, wobei das entfernte System (300) eine Datenbank (230) der eindeutigen Identifizierer besitzt, wobei eine Zahlung zur Guthabenaufstockung an ein Messgerät den eindeutigen Identifizierer enthält, wobei das entfernte System (300) auf eine Zahlung hin reagiert, um eine Kommunikation mit der Kommunikationseinheit (20) des Ortes unter Verwendung des eindeutigen Identifizierers einzuleiten, und um geeignete Vorauszahlungskredite dem Speicher hinzuzufügen.

31. Transaktionsberechtigungssystem nach Anspruch 30, in welchem dann, wenn Vorauszahlungsguthaben im Speicher eine vorgegebene Höhe erreichen, oder darunter fallen, das Versorgungsmessgerät (10) angeordnet ist, um mit einer vorbestimmten Stelle zu kommunizieren, um Notkredite zu erhalten.

32. Transaktionsberechtigungssystem gemäß Anspruch 29, 30, oder 31,
in welchem jede Kommunikationseinheit (20) Daten zur Verwendung bei der Einleitung der Kommunikation mit der Kommunikationseinheit (20) enthält, wobei die Daten in der Datenbank gespeichert und mit dem eindeutigen Identifizierer für den Ort der Kommunikationseinheit (20) verknüpft sind, wobei das entfernte System den eindeutigen Identifizierer verwendet um die Daten zur Einleitung der Kommunikation mit der Kommunikationseinheit (20) zu erhalten.

## Revendications

1. Un système d'autorisation de transaction **caractérisé par** : une unité d'interface utilisateur (30) capable d'accepter des entrées utilisateur durant une transaction et incluant un dispositif lecteur de carte (35) ; et, un compteur de consommation (10) localisé à un emplacement ayant un identifiant de localisation associé unique à cet emplacement, dans lequel le dispositif lecteur de carte (35) est conçu pour lire des données depuis une carte destinée à être chargée pour la transaction, le compteur de consommation (10) et l'unité d'interface utilisateur (30) étant conçus pour communiquer, pour générer une requête d'autorisation de transaction basée sur les entrées utilisateur durant la transaction, sur les données sur la carte lue par le dispositif lecteur de carte (35) et sur l'identifiant de localisation, et pour transmettre la requête d'autorisation de transaction à une instance d'autorisation éloignée (40) afin d'obtenir l'autorisation de transaction.

2. Un système d'autorisation de transaction selon la revendication 1, comprenant en outre une unité de communication (20) conçue pour communiquer avec l'instance d'autorisation (40), dans lequel le compteur de consommation (10) est conçu pour soumettre la requête d'autorisation à l'unité de communication (20) pour communiquer avec l'instance d'autorisation afin d'obtenir l'autorisation de transaction.

3. Un système d'autorisation de transaction selon la revendication 2, dans lequel le compteur de consommation (10) est conçu pour soumettre des données d'usage de consommation afin d'obtenir l'autorisation de transaction.

4. Un système d'autorisation de transaction selon la revendication 2 ou 3, comprenant un autre compteur de consommation (10) prévu à cet emplacement, dans lequel ce compteur de consommation (10) est conçu pour soumettre des données d'usage de consommation à l'unité de communication (20).

5. Un système d'autorisation de transaction selon la revendication 4, dans lequel cet autre compteur de consommation (50,60) est conçu pour soumettre les données d'usage de consommation au compteur de consommation (10) pour soumission à l'unité de communication (20).

6. Un système d'autorisation de transaction selon la revendication 4 ou 5, dans lequel cet autre compteur de consommation (50,60) est un compteur de gaz ou d'eau.

7. Un système d'autorisation de transaction selon l'une quelconque des revendications précédentes, dans lequel le compteur de consommation (10) est un compteur d'électricité.

8. Un système d'autorisation de transaction selon l'une quelconque des revendications 3 à 7, dans lequel l'unité de communication (20) est conçue pour communiquer des données d'usage de consommation à un fournisseur de consommation.

9. Un système d'autorisation de transaction selon l'une quelconque des revendications 3 à 7, dans lequel l'unité de communication (20) communique avec un ou plusieurs fournisseurs de consommation par l'intermédiaire d'un système de contrôle central.

10. Un système d'autorisation de transaction selon la revendication 2, dans lequel l'instance d'autorisation (40) comprend un système de contrôle central, et dans lequel le système de contrôle central traite les requêtes d'autorisation reçues et soumet les requêtes aux établissements bancaires appropriés pour exécution.

11. Un système d'autorisation de transaction selon l'une quelconque des revendications 2 à 10, dans lequel l'unité de communication (20) est un modem.

12. Un système d'autorisation de transaction selon l'une quelconque des revendications 2 à 10, dans lequel l'unité d'interface utilisateur (30) est l'unité de communication (20).

13. Un système d'autorisation de transaction selon la revendication 12, dans lequel l'unité d'interface utilisateur (30) est un téléphone.

14. Un système d'autorisation de transaction selon l'une quelconque des revendications précédentes, dans lequel l'unité d'interface utilisateur (30) et le compteur de consommation (10) communiquent l'un avec l'autre par l'intermédiaire de signaux radiofréquences.

15. Un système d'autorisation de transaction selon l'une quelconque des revendications 2 à 11, dans lequel l'unité de communication (20) et le compteur de consommation (10) communiquent l'un avec l'autre par l'intermédiaire de signaux radiofréquences.

16. Un système d'autorisation de transaction selon la revendication 4 ou 5, dans lequel l'autre compteur de consommation (10) communique par l'intermédiaire de signaux radiofréquences.

17. Un système d'autorisation de transaction selon l'une quelconque des revendications précédentes, dans lequel l'unité d'interface utilisateur (30) comprend un clavier (37), et dans lequel l'unité d'interface utilisateur (30) est conçue pour accepter des données entrées par l'intermédiaire du clavier (37) pour former au moins une partie de la requête d'autorisation de transaction.

18. Un système d'autorisation de transaction selon l'une quelconque des revendications précédentes, dans lequel le compteur de consommation (10) inclut une mémoire (16) pour stocker les données bancaires d'utilisateur, et dans lequel l'unité d'interface utilisateur (30) est conçue pour accepter une entrée de l'utilisateur autorisant l'utilisation d'au moins une partie des données bancaires, le compteur de consommation (10) utilisant ensuite cette partie au moins des données bancaires pour former au moins une partie de la requête d'autorisation de transaction.

19. Un système d'autorisation de transaction selon la revendication 1, 3 ou 5, dans lequel l'unité d'interface utilisateur (30) inclut un afficheur, et dans lequel l'unité d'interface utilisateur (30) est conçue pour afficher sur requête les données d'usage de consommation du compteur de consommation (10).

20. Un système d'autorisation de transaction selon l'une quelconque des revendications précédentes, dans lequel l'unité d'interface utilisateur (30) est connectable à un ordinateur (70), et dans lequel l'unité d'interface utilisateur (30), lorsqu'elle est connectée à un ordinateur, est capable d'effectuer les requêtes d'autorisation de transaction nécessaires en réponse aux transactions électroniques initiées sur l'ordinateur (70).

21. Un système d'autorisation de transaction selon la revendication 20, dans lequel l'unité d'interface utilisateur (30) inclut un connecteur USB pour la connexion à l'ordinateur (70).

22. Un système d'autorisation de transaction selon l'une quelconque des revendications précédentes, dans lequel la transaction est une transaction financière.

23. Un système d'autorisation de transaction selon l'une quelconque des revendications précédentes, dans lequel l'unité d'interface utilisateur (30) est éloignée du compteur de consommation (10).

24. Un système d'autorisation de transaction selon l'une quelconque des revendications précédentes, comprenant en outre un transmetteur cellulaire numérique (14) conçu pour communiquer avec le compteur de consommation (10) pour transmettre des données à, et recevoir des données depuis, une source distante.

25. Un système d'autorisation de transaction selon la revendication 24 prise en dépendance de la revendication 2, dans lequel le transmetteur est l'unité de communication (20).

26. Un système d'autorisation de transaction selon la revendication 24 ou 25, comprenant en outre une unité de commutation contrôlable par le compteur de consommation (10) pour allumer ou éteindre un ou plusieurs appareils, dans lequel, lorsque le compteur de consommation (10) reçoit un signal par l'intermédiaire du transmetteur indiquant la disponibilité d'énergie à tarif réduit, il est prévu de contrôler l'unité de commutation pour allumer les appareils.

27. Un système d'autorisation de transaction selon l'une quelconque des revendications précédentes, dans lequel la requête d'autorisation de transaction comprend des données relatives à une transaction et une autorisation pour compléter la transaction.

28. Une méthode pour effectuer une transaction en utilisant le système d'autorisation de transaction selon l'une des revendications précédentes, **caractérisée par** les étapes consistant à commander des articles ou des services pour lesquels un paiement est requis, recevoir des données de transaction, entrer les données de transaction par l'intermédiaire de l'interface utilisateur (30), lire les données depuis une carte destinée à être chargée pour la transaction par l'intermédiaire d'un dispositif de lecture (35), l'interface utilisateur (30) communiquant avec un compteur de consommation (10) localisé à un emplacement ayant un identifiant de localisation associé unique à cet emplacement, générer une requête d'autorisation de transaction basée sur les données de transaction entrées par l'utilisateur, sur les données lues depuis la carte et sur l'identifiant de localisation, et communiquer la requête d'autorisation de transaction à une instance d'autorisation distante afin d'obtenir l'autorisation pour la transaction.

29. Un système d'autorisation de transaction selon la revendication 2, comprenant en outre une unité de commutation (13) contrôlable par le compteur de consommation (10) prévu à l'emplacement donné pour allumer ou éteindre des appareils (100,110,111), le compteur de consommation (10) étant conçu pour communiquer avec un système distant par l'intermédiaire de l'unité de communication (20), le système distant (130) ayant une base de données des identifiants uniques, dans lequel, dès la détermination ou la prévision d'un surplus ou d'un manque d'énergie, le système distant (130) est conçu pour sélectionner les emplacements appropriés où éteindre ou allumer les appareils pour compenser le surplus ou le manque, pour chaque emplacement sélectionné le système distant (130) déterminant l'identifiant unique de cet emplacement depuis la base de données et communiquant les données de contrôle pour l'unité de commutation de cet emplacement au compteur de consommation (10) de cet emplacement par l'intermédiaire de l'unité de communication (20) de cet emplacement en utilisant l'identifiant unique de cet emplacement.

30. Un système d'autorisation de transaction selon la revendication 2, dans lequel le compteur de consommation (10) est un compteur de consommation à prépaiement (10), le compteur de consommation (10) ayant une mémoire pour stocker des crédits de prépaiement, le compteur de consommation (10) étant conçu pour communiquer avec un système distant (300) ayant une base de données (230) des identifiants uniques, dans lequel un paiement pour créditer un compteur inclut l'identifiant unique, le système distant (300) étant réceptif à un paiement pour initier la communication avec l'unité de communication (20) de l'emplacement utilisant cet identifiant unique et pour ajouter les crédits de prépaiement appropriés à la mémoire.

31. Un système d'autorisation de transaction selon la revendication 30, dans lequel, lorsque les crédits de prépaiement atteignent ou chutent en-dessous d'un seuil prédéterminé dans la mémoire, le compteur de consommation (10) est conçu pour communiquer avec une instance prédéterminée afin d'obtenir des crédits d'urgence.

32. Un système d'autorisation de transaction selon la revendication 29, 30 ou 31, dans lequel chaque unité de communication (20) inclut des données utilisées pour initier la communication avec l'unité de communication (20), les données étant stockées dans la base de données et étant reliées à l'identifiant unique de l'emplacement de l'unité de communication (20), et dans lequel le système distant utilise l'identifiant unique afin d'obtenir les données pour initier la communication avec l'unité de communication (20).
